Europäisches Patentamt

**European Patent Office**

Office européen des brevets

(19)

(11) Numéro de publication: **0 078 198**
**A1**

## (12) DEMANDE DE BREVET EUROPEEN

(21) Numéro de dépôt: **82401911.1**

(22) Date de dépôt: **19.10.82**

(51) Int. Cl.³: **G 01 N 27/90**

(30) Priorité: **27.10.81 FR 8120279**

(43) Date de publication de la demande:
**04.05.83 Bulletin 83/18**

(84) Etats contractants désignés:
**AT BE CH DE GB IT LI LU NL SE**

(71) Demandeur: **INSTITUT DE RECHERCHES DE LA SIDERURGIE FRANCAISE (IRSID) France**
**185, rue Président Roosevelt**
**F-78105 Saint Germain-en-Laye Cédex(FR)**

(72) Inventeur: **Lacroix, Marc**
**6, Impasse des Pêcheries**
**F-78230 Le Pecq(FR)**

(72) Inventeur: **Boulet, Pascal**
**60bis, Grande rue**
**F-78630 Morainvilliers(FR)**

(74) Mandataire: **Ventavoli, Roger et al,**
**INSTITUT DE RECHERCHES DE LA SIDERURGIE FRANCAISE (IRSID) 185, rue Président Roosevelt**
**F-78105 Saint-Germain-en-Laye(FR)**

(54) **Procédé de détection de défauts d'un produit métallique par courants de Foucault.**

(57) Procédé de détection des défauts d'un produit métallique, selon lequel on couple le produit électromagnétiquement avec une sonde comportant une pluralité de bobines, l'un du produit ou de la sonde étant en mouvement relatif par rapport à l'autre, et on observe les variations des courants de Foucault dues aux défauts que présente le produit.

Le procédé se caractérise en ce que:
- on utilise une sonde comportant au moins quatre bobines qui sont montées electroniquement de façon à fournir chacune un signal de mesure en valeur absolue,
- on enregistre les signaux de mesure produits par chaque bobine,
- on calcule une combinaison linéaire Pni des signaux d'au moins quatre bobines successives $b_{i+1}$, $b_{i+2}$, ..., $b_{i+n}$ dans le sens transversal par rapport au mouvement relatif entre le produit et la sonde, selon la relation

$$Pni = \sum_{j=1}^{n} Xi+j \cdot bi+j,$$

dans laquelle X est un coefficient propre à chaque bobine, et
- on observe les variations de cette combinaison linéaire Pni.

Fig_1

EP 0 078 198 A1

# PROCEDE DE DETECTION DE DEFAUTS
## D'UN PRODUIT METALLIQUE PAR COURANTS DE FOUCAULT

La présente invention concerne un procédé de détection de défauts d'un produit métallique par courants de Foucault et un dispositif de mise en oeuvre dudit procédé.

On sait que la détection de défauts dans un produit métallique par courants de Foucault consiste à étudier les variations des courants induits par le champ magnétique de bobines parcourues par un courant d'excitation alternatif. Ces courants induits produisent, en retour, un champ qui s'oppose au champ inducteur et, par suite, modifient l'impédance de la bobine d'excitation. Tout défaut de la pièce examinée se présentant à proximité des bobines modifie le parcours ou l'intensité des courants de Foucault et, en conséquence, l'impédance des bobines.

Dans les techniques utilisées jusqu'à présent, la sonde est généralement constituée par deux bobines placées sur les deux branches d'un pont de mesure. Les signaux enregistrés par les deux bobines d'un même pont se soustraient l'un à l'autre, ce qui permet de réduire l'influence des paramètres indésirables affectant simultanément les deux bobines (température et magnétisme du produit, écartement de la sonde du produit, etc...) sans pour cela nuire à la sensibilité aux défauts. Une sonde de ce type est suffisamment sensible pour des défauts courts, mais, par contre, elle ne l'est pas toujours pour des défauts longs, surtout dans le cas de la détection de défauts dans des produits longs tels que des billettes.

En général, les billettes présentent une forte hétérogénéité transversale (déformation de la section, calamine, variation des caractéristiques métallurgiques etc ...) ; ce qui s'observe par un décalage du niveau de base au zéro des signaux entre le centre et les bords de la billette. Or, ce décalage est plus important que la variation du signal provoquée par un défaut long. Le montage de deux bobines en différentiel ne permet donc pas d'éliminer les bruits métallurgiques transversaux, ce qui oblige à surcharger l'équipement électronique pour pouvoir détecter les défauts longs.

Une autre difficulté pour la détection de défauts longs provient du fait que, dans le pont différentiel à deux bobines, les signaux dus à des défauts longs varient selon leurs positions transversales par rapport aux axes des bobines.

Le but de l'invention est justement de résoudre les problèmes rappelés ci-dessus, et plus particulièrement, de fournir un procédé de détection efficace de défauts longs apparaissant dans des produits longs tels que des billettes.

A cet effet, l'invention a pour objet un procédé de détection de défauts d'un produit métallique, couplé électromagnétiquement avec une sonde comportant une pluralité de bobines, l'un du produit ou de la sonde étant en mouvement relatif par rapport à l'autre, selon lequel on observe les variations de courants de Foucault dues aux défauts que présente le produit. Selon l'invention, le procédé est caractérisé en ce que :

- on utilise une sonde comportant au moins quatre bobines qui sont montées indépendamment les unes des autres,

- on enregistre les signaux de mesure produits par chaque bobine,

- on calcule une combinaison linéaire $P_{ni}$ des signaux de n bobines successives $b_{i+1}$, $b_{i+2}$, $b_{i+3}$, ...., $b_{i+n}$ dans le sens transversal par rapport au mouvement relatif entre le produit et la sonde, selon la relation :

$$P_{ni} = \sum_{j=1}^{n} X_{i+j} \cdot b_{i+j}$$

dans laquelle X est un coefficient propre à chaque bobine,

- et on observe les variations de cette combinaison linéaire $P_{ni}$.

Selon un mode de réalisation de l'invention, les bobines ont quasiment la même sensibilité électromagnétique et la combinaison linéaire $P_{4i}$ des signaux de quatre bobines successives est donnée par la formule suivante

$$P_{4i} = - b_{i+1} + b_{i+2} + b_{i+3} - b_{i+4}$$

Selon un mode de réalisation préféré de l'invention, on effectue la soustraction des signaux de deux bobines $P_{2i} = - b_{i+1} + b_{i+3}$, cette valeur $P_{2i}$ étant utilisée pour la détection de défauts courts, et on calcule $P_{4i} = P_{2i} - P_{2i+1}$ pour la détection de défauts longs.

Selon une caractéristique de l'invention, les bobines sont équidistantes les unes des autres dans le sens transversal par rapport au sens du mouvement relatif entre le produit et la sonde. Bien que les bobines puissent être alignées transversalement, il est préférable que les bobines soient décalées dans le sens du mouvement relatif entre le produit et la sonde pour permettre une plus grande plage de détection.

Selon un mode de réalisation préféré, l'espacement transversal d entre deux bobines successives est tel que :

$$0,4 < \frac{d}{REQ} < 1,2$$

où REQ est le rayon définissant la zone de sensibilité de la bobine ; il est tel que la sensibilité à la distance $\frac{REQ}{2}$ de l'axe de la bobine soit égale à la moitié de la sensibilité dans l'axe de la bobine.

De préférence, l'espacement d est tel que :

$$0,5 < \frac{d}{REQ} \leqslant 1$$

Selon une variante de réalisation de l'invention,

- on effectue la sélection des signaux d'au moins quatre bobines,

- on effectue la correction de zéro des signaux par rapport à une base précédemment calculée,

- on effectue la démodulation des signaux ainsi mis en correction de façon à obtenir leurs deux composantes complexes,

- on convertit les composantes complexes en signaux numériques,

- on calcule la combinaison linéaire P4i pour observation de défauts.

L'invention a également pour objet le dispositif de mise en oeuvre du procédé, qui comprend :

- une sonde comportant une pluralité de bobines alimentées en courant alternatif, située à proximité du produit métallique de façon à coupler ce dernier avec les bobines, l'un du produit ou de la sonde étant mis en mouvement relatif par rapport à l'autre,

- des moyens pour sélectionner les signaux de mesure produits par les bobines à un intervalle de temps prédéterminé,

- des moyens pour démoduler lesdits signaux de façon à fournir leurs composantes complexes, ces moyens étant précédés d'un étage d'amplification et de filtrage, et

- des moyens analogiques ou numériques pour calculer la combinaison linéaire P4i.

Les moyens pour sélectionner les signaux sont constitués de préférence par un multiplexeur différentiel, ce qui permet d'utiliser la valeur P2i pour la détection de défauts courts.

Suivant une caractéristique de l'invention, le dispositif comprend une boucle de contre-réaction pour faire la correction de zéro des signaux sélectionnés par rapport à une base précédemment calculée. La boucle de contre-réaction est, de préférence, constituée par :

- un intégrateur pour calculer les valeurs moyennes des signaux démodulés,

- un modulateur pour transformer lesdites valeurs en signaux qui soient en phase avec les signaux sélectionnés,

- un comparateur qui fait la différence entre les signaux sélectionnés et les signaux remodulés et la fournit à l'étage d'amplification et de filtrage.

Suivant une caractéristique de l'invention, la boucle de contre-

4

réaction comprend une mémoire qui enregistre les valeurs moyennes calculées par l'intégrateur et qui les transmet au modulateur en synchronisation avec les moyens pour sélectionner.

Avec la combinaison linéaire Pni des signaux des bobines disposées selon l'invention, on peut obtenir une sensibilité suffisante pour la détection des défauts longs. De plus, la variation de la combinaison linéaire due à des défauts longs ne dépend pas de la position des défauts par rapport aux axes des bobines et est sensiblement uniforme dans toute la zone de sondage. Par conséquent, cette sensibilité augmentée de la détection allège l'équipement électronique destiné à l'analyse des signaux de mesure.

Il est à noter que, selon un mode de réalisation préféré, on fait la correction de zéro sur les signaux de mesure juste après le multiplexage ; ceci est préférable pour éviter la saturation du traitement électronique. De plus, en faisant séquentiellement les combinaisons linéaires pour différents groupes de bobines, on peut faire la détection d'une partie plus grande du produit au moyen d'une même sonde et d'un seul équipement électronique.

D'autres caractéristiques et avantages de l'invention seront bien compris au vu de la description qui va suivre, donnée à titre d'exemple, en référence aux dessins annexés, sur lesquels :

- la figure 1 représente un mode de réalisation de la disposition des bobines selon l'invention.

- la figure 2 représente un mode de réalisation du montage électrique des bobines selon l'invention.

- la figure 3 schématise un dispositif de mise en oeuvre du procédé selon l'invention.

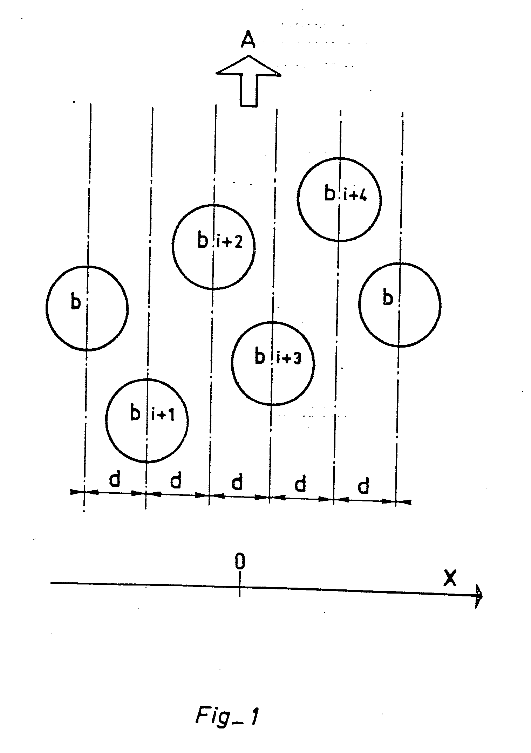

On a représenté, sur la figure 1, six bobines qui sont disposées sur une face d'un produit long à examiner. Ces bobines sont équidistantes les unes des autres dans le sens transversal par rapport au sens de déplacement du produit qui est indiqué par une flèche A. Le produit est en mouvement relatif par rapport à la sonde.

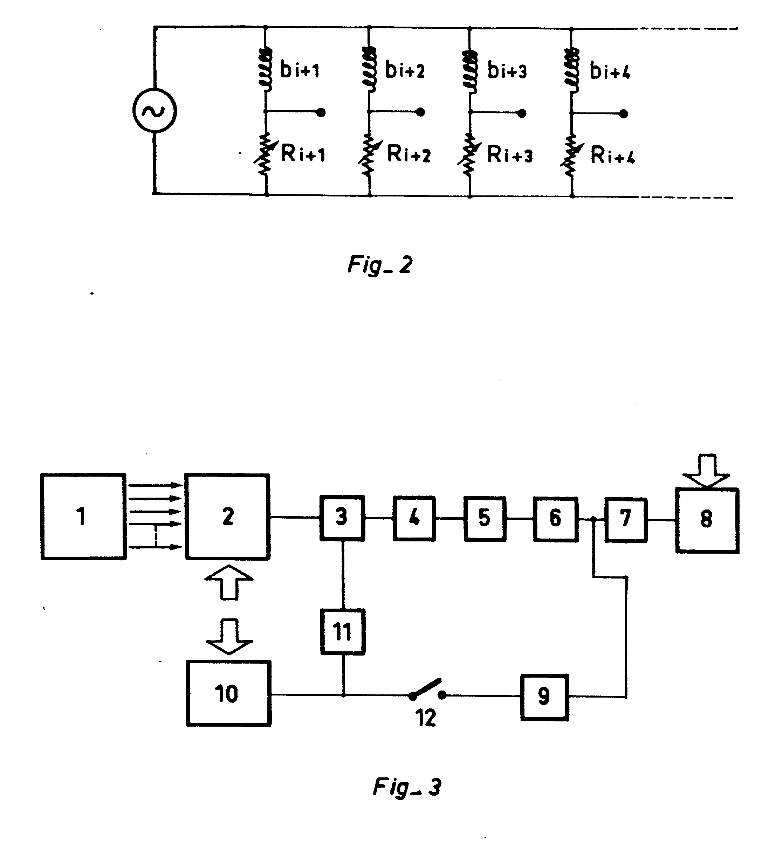

Selon l'invention, les bobines sont montées indépendamment les unes des autres, par exemple en parallèle comme représenté sur la figure 2. En combinant linéairement les tensions des bobines bi, on obtient une combinaison linéaire $\Sigma$ Xi.bi des signaux de mesure.

A titre d'exemple, lorsque les bobines bi présentent les mêmes caractéristiques et la même sensibilité, le coefficient Xi est égal à ±1. Dans le cas représenté sur la figure 1 où les bobines sont équidistantes les unes des autres, l'espacement séparant deux bobines successives étant d, la combinaison linéaire des tensions de quatre bobines est :

$$P4i = - S(x + 1,5d) + S(x + 0,5d) + S(x - 0,5d) - S(x - 1,5d)$$

où   x    : position d'un défaut long sur la face d'un produit,

$S(x)$ : valeur de la réponse de la bobine pour ce défaut.

Selon un mode de réalisation, l'espacement d est choisi de façon à satisfaire la relation :

$$0,4 < k < 1,2 \qquad (k = \frac{d}{REQ})$$

Lorsque la valeur k est inférieure à 0,4, c'est-à-dire lorsque les bobines incorporées dans la sonde sont trop nombreuses, l'action des différentes bobines se compense et la sensibilité décroît dans toute la zone. D'autre part, lorsque la valeur k est supérieure à 1,2, c'est-à-dire lorsque les bobines sont peu nombreuses, on court le risque de ne pas détecter certains défauts.

De préférence, l'espacement d est choisi de façon à satisfaire la relation suivante :

$$0,5 < k \leqslant 1,0$$

On constate que, pour k compris entre 0,5 et 1,0, la sensibilité est importante dans la partie comprise entre les bobines du milieu. k = 1 est un cas intéressant sachant que, pour un même rayon REQ, plus k est important, plus l'espacement entre les bobines est important et par conséquent plus le nombre de bobines nécessaires pour couvrir toute une face du produit est réduit.

On donne, ci-dessous, une description plus détaillée du procédé et d'un mode de réalisation du dispositif utilisé. Cette description est faite en se référant aux figures 2 et 3.

Comme on l'a déjà expliqué, les bobines bi sont montées électriquement en parallèle dans la sonde 1 afin de pouvoir enregistrer les signaux de mesure indépendamment les uns des autres. Le circuit électrique de la sonde 1 comporte des résistances variables Ri respectivement montées à chaque branche en série avec les bobines bi. La sonde 1 est associée à une alimentation de courant alternatif de façon à exciter les bobines bi en même phase et amplitude.

Les bornes de sortie des bobines bi sont réunies à l'entrée d'un multiplexeur différentiel 2 qui fonctionne au rythme de commande d'une horloge (non représentée sur la figure 3) et qui fait la soustraction des signaux des bobines de façon à fournir une combinaison P2i :

$$P2i = - bi+1 + bi+3$$

6

0078198

L'utilisation d'un multiplexeur différentiel à cet étage n'est pas impérative. L'avantage de cette sélection sera expliqué ci-après.

La borne de sortie du multiplexeur 2 est reliée à l'entrée d'un comparateur 3 qui reçoit par ailleurs un signal de référence. Le comparateur différentiel 3 fait la différence entre le signal sélectionné et le signal de référence correspondant et la transmet à un amplificateur 4 dans lequel le signal est amplifié afin qu'il ait un niveau suffisant pour que puissent s'effectuer les opérations suivantes. L'amplificateur 4 est relié à un filtre passe-bande 5 de type classique qui permet d'éliminer le bruit résiduel dû au multiplexage.

Le filtre passe-bande 5 est relié à un démodulateur 6.

Le démodulateur 6 est relié à un convertisseur analogique-numérique 7 qui convertit les composantes complexes en signaux numériques. La borne de sortie du convertisseur analogique-numérique est reliée à un calculateur 8.

Le calculateur 8 fait la combinaison linéaire $\Sigma$ Xibi, selon la relation suivante :

$$P4i = P2i - P2i+1$$

Le calculateur 8 fonctionne au rythme de synchronisation et indique la présence de défauts longs d'après son observation de P4i.

Comme on le voit sur la figure 3, la boucle de contre-réaction est constituée par un intégrateur 9, une mémoire 10, un modulateur 11 et le comparateur 3. L'intégrateur 9 reçoit les signaux analogiques du démodulateur 6 et calcule les valeurs moyennes des signaux. La borne de sortie de l'intégrateur 9 est reliée, par l'intermédiaire d'un commutateur électronique 12, à la mémoire 10 qui enregistre les valeurs moyennes des signaux numériques et qui les transmet au modulateur 11 en synchronisation avec le multiplexeur 2. Le modulateur 11 remodule les valeurs moyennes sur une même tension électrique que le signal sélectionné par le multiplexeur. Comme on l'a décrit ci-dessus, le signal remodulé par le modulateur 11 est transmis au comparateur différentiel 3.

On explique, ci-après, le fonctionnement de ce dispositif de mise en oeuvre du procédé selon l'invention.

On alimente les bobines bi en courant alternatif. Pour que les bobines soient indépendantes les unes des autres, il faut que la tension d'alimentation soit maintenue constante en module et en phase pour toutes les bobines bi.

Chaque branche i de la sonde 1 permet de détecter les variations d'impédance d'une bobine selon la formule :

$$Bi = Ti \cdot \frac{\Delta Zi}{jL_i\omega}$$

dans laquelle :

    Bi   : tension aux bornes de la bobine bi,

    Ti   : transmittance de la branche i,

    $\Delta Zi$   : variation d'impédance de la bobine bi,

    Li   : réactance de la bobine bi.

On peut ajuster la transmittance Ti par la résistance variable Ri pour que la tension de mesure Bi soit proche du potentiel zéro et que chaque branche i présente la même sensibilité en module et en phase.

Les tensions de déséquilibre des branches i sont enregistrées séquentiellement à l'aide du multiplexeur différentiel 2 selon la formule P2i = - bi+1 + bi+3. On peut faire la combinaison linéaire d'au moins quatre bobines à n'importe quel stade du traitement électronique. Cependant, dans le cas décrit, on fait une partie de la combinaison juste avant l'étage d'amplification pour les raisons suivantes :

a) Cette solution simplifie le montage électronique et réduit les risques de saturation de l'électronique par des dérives, par exemple, des dérives de température.

b) Le signal P2i peut être exploité pour la détection des défauts courts. Il n'y a, en effet, aucun avantage à traiter des défauts courts avec une combinaison linéaire d'au moins quatre bobines telle que celle qui est prévue pour la détection de défauts longs.

Le multiplexeur fait la sélection au rythme de synchronisation qui est décidé en tenant compte de la durée de temps nécessaire pour le traitement électronique des signaux.

Le comparateur différentiel 3 reçoit le signal P2i et le signal de référence, et fait la correction de zéro sur le signal P2i.

La correction de zéro faite à cet étage, c'est-à-dire avant l'amplification, présente également l'avantage d'éviter les saturations de l'électronique. Il est nécessaire que le multiplexeur 2 et le modulateur 11 transmettent les signaux au comparateur 3 à un même rythme de synchronisation.

L'amplificateur 4 amplifie le signal ainsi mis en correction de zéro par un gain approprié et le filtre passe-bande 5 fait le filtrage du signal et le transmet au démodulateur 6.

Le démodulateur 6 met, à son tour, le signal sous une forme démodulée, c'est-à-dire, sous forme d'un vecteur à deux composantes. Le signal sous forme d'un vecteur est transmis au convertisseur analogique-numérique 7.

Le calculateur 8 fait la combinaison linéaire P4i selon la

8

0078198

formule :

$$P2i - P2i+1 = P4i$$

On observe les variations de P4i afin de détecter les défauts longs. Cette observation peut être faite de façon classique, par exemple, par comparaison avec un seuil prédéterminé ou avec une valeur de P4i pour une partie correspondante du produit qui a été précédemment trouvée sans défauts.

D'autre part, l'intégrateur 9 reçoit les signaux analogiques du modulateur 6 et calcule leurs valeurs moyennes afin d'obtenir la base de référence pour la correction de zéro. Les valeurs moyennes ainsi calculées sont transmises à la mémoire 10 par l'intermédiaire du commutateur 12. Ensuite, les valeurs moyennes sont enregistrées dans la mémoire 10 avec des adresses qui correspondent à la partie du produit examinée. Avec un signal de commande, les signaux de référence sont transmis de la mémoire 10 au modulateur 11 qui fait la remodulation des signaux sur la tension électrique de mesure. Le signal de référence ainsi remodulé est transmis au comparateur 3 pour faire la correction de zéro sur le signal sélectionné.

Il est à noter qu'il y a deux étapes de fonctionnement de la boucle de contre-réaction, qui se font au moyen du commutateur 12.

1ère étape

La boucle de contre-réaction est fermée. Deux composantes du signal de référence sont calculées, puis mises en mémoire séquentiellement pour chaque combinaison P2i. Une fois ce calcul effectué, le commutateur 12 est ouvert et l'intégrateur 9 est remis à zéro.

2ème étape

La boucle de contre-réaction est ouverte. Les deux composantes du signal de référence sont transmises au modulateur 11 au rythme de multiplexage.

Il va de soi que la présente invention n'est pas limitée aux modes de réalisation particuliers décrits. Ainsi la technologie particulière de l'équipement électronique peut être remplacée par toute autre technologie équivalente sans sortir du cadre de l'invention telle que définie par les revendications annexées.

Le procédé selon l'invention s'applique de façon particulièrement avantageuse à la détection de la présence de défauts longs dans les produits longs sidérurgiques tels que des billettes.

## REVENDICATIONS

1°) Procédé de détection des défauts d'un produit métallique, couplé électromagnétiquement avec une sonde comportant une pluralité de bobines, l'un du produit ou de la sonde étant en mouvement relatif par rapport à l'autre, selon lequel on observe les variations des courants de Foucault dues aux défauts que présente le produit, caractérisé en ce que :

- on utilise une sonde comportant au moins quatre bobines qui sont montées indépendamment les unes des autres,

- on enregistre les signaux de mesure produits par chaque bobine,

- on calcule une combinaison linéaire Pni des signaux d'au moins quatre bobines successives bi+1, bi+2, ..., bi+n dans le sens transversal par rapport au mouvement relatif entre le produit et la sonde, selon la relation :

$$Pni = \sum_{j=1}^{n} Xi+j \cdot bi+j,$$

dans laquelle X est un coefficient propre à chaque bobine, et

- on observe les variations de cette combinaison linéaire Pni.

2°) Procédé selon la revendication 1, caractérisé en ce qu'on calcule une combinaison linéaire P4i des signaux de quatre bobines successives bi+1, bi+2, bi+3 et bi+4 selon la relation P4i = Xi+1 . bi+1 + Xi+2 . bi+2 + Xi+3 . bi+3 + Xi+4 . bi+4.

3°) Procédé selon la revendication 2, caractérisé en ce que les bobines ont quasiment la même sensibilité électromagnétique et la combinaison linéaire P4i des signaux des quatre bobines est donnée par la formule suivante :

P4i = - bi+1 + bi+2 + bi+3 - bi+4

4°) Procédé selon la revendication 3, caractérisé en ce que :

- pour les défauts courts, on effectue la sélection des signaux de deux bobines P2i = - bi+1 + bi+3, et

- pour les défauts longs, on calcule P4i = P2i - P2i+1.

5°) Procédé selon l'une des revendications 2 à 4, caractérisé en ce que les bobines sont équidistantes les unes des autres dans le sens transversal par rapport au sens du mouvement relatif entre le produit et la sonde.

6°) Procédé selon la revendication 5, caractérisé en ce que l'espacement d entre deux bobines successives est tel que :

$$0,4 < \frac{d}{REQ} < 1,2$$

où REQ est le rayon définissant la zone de sensibilité de la bobine.

0078198

7°) Procédé selon la revendication 6, caractérisé en ce que l'espacement d entre deux bobines successives est tel que :

$$0,5 < \frac{d}{REQ} \leqslant 1$$

8°) Procédé selon l'une des revendication 1 à 7, caractérisé en ce que :

- on effectue la sélection des signaux d'au moins quatre bobines,

- on effectue la correction de zéro des signaux par rapport à une base précédemment calculée,

- on effectue la démodulation des signaux ainsi mis en correction de façon à obtenir leurs composantes complexes,

- on transforme les composantes complexes en signaux numériques,

- on compare Pni à un seuil prédéterminé.

9°) Dispositif de mise en oeuvre du procédé selon l'une des revendications 1 à 8, caractérisé en ce qu'il comprend :

- une sonde comportant une pluralité de bobines alimentées en courant alternatif, située à proximité du produit métallique de façon à coupler ce dernier avec les bobines, l'un du produit ou de la sonde étant en mouvement relatif par rapport à l'autre,

- des moyens pour sélectionner les signaux de mesure produits par les bobines à un intervalle de temps prédéterminé,

- des moyens pour démoduler lesdits signaux de façon à fournir leurs composantes complexes, ces moyens étant précédés d'un étage d'amplification, et

- des moyens analogiques ou numériques pour calculer la combinaison linéaire P4i.

10°) Dispositif selon la revendication 9, caractérisé en ce que les moyens pour sélectionner les signaux de mesure produits par les bobines sont constitués par un multiplexeur différentiel.

11°) Dispositif selon l'une des revendications 9 ou 10, caractérisé en ce qu'il comprend une boucle de contre-réaction pour faire la correction de zéro des signaux sélectionnés par rapport à une base précédemment calculée.

12°) Dispositif selon la revendication 11, caractérisé en ce que la boucle de contre-réaction est constituée par :

- un intégrateur pour calculer les valeurs moyennes des signaux démodulés,

- un modulateur pour transformer lesdites valeurs en signaux qui soient en phase avec les signaux sélectionnés,

- un comparateur qui fait la différence entre les signaux sélectionnés et les signaux modulés et la fournit à l'étage d'amplific**007.8198**

13°) Dispositif selon la revendication 12, caractérisé en ce que la boucle de contre-réaction comprend une mémoire qui enregistre les valeurs moyennes émises par l'intégrateur et qui les fournit au modulateur en synchronisation avec les moyens pour sélectionner.

1/2

Fig_1

Fig_ 2

Fig_ 3

Office européen
des brevets

**RAPPORT DE RECHERCHE EUROPEENNE**

**0078198**

Numéro de la demande

EP   82 40 1911

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| | --- | | G 01 N   27/90 |
| A | EP-A-0 021 893   (IRSID) *Page 8, lignes 3-23* | 1 | |
| | --- | | |
| A | EP-A-0 027 525   (INSTITUT DR. F.FÖRSTER PRÜFGERÄTEBAU) *Page 1, des revendications* | 1 | |
| | --- | | |
| A | FR-A-2 342 498   (INSTITUT DR.F.FÖRSTER PRÜFGERÄTEBAU) *Page 14, lignes 2-23* | 1 | |
| | --- | | |
| A | FR-A-2 412 841   (IRSID) *Page 6, ligne 2-11* | 1 | |
| | --- | | |
| A | FR-A-2 422 952   (IRSID) *Page 8, lignes 1-31* | 1 | DOMAINES TECHNIQUES RECHERCHES (Int. Cl. 3) |
| | ----- | | G 01 N   27/00 |

Le présent rapport de recherche a été établi pour toutes les revendications

| Lieu de la recherche | Date d'achèvement de la recherche | Examinateur |
|---|---|---|
| LA HAYE | 24-01-1983 | ANTHONY R.G. |